# EUROPÄISCHE PATENTSCHRIFT

(11) **EP 1 712 419 B1**
(45) Veröffentlichungstag und Bekanntmachung des Hinweises auf die Patenterteilung: **10.06.2009**
(21) Anmeldenummer: 06006978.8
(22) Anmeldetag: 31.03.2006
(51) Int. Cl.: B60R 9/04, B62D 29/02

(54) **Dachrelinganordnung und Verfahren zur Herstellung einer Dachrelinganordnung**
Roof rack assembly and a method for manufacturing a roof rack assembly
Rail de toit et son procédé de fabrication

(30) Priorität: 14.04.2005 DE 102005017380
(43) Veröffentlichungstag der Anmeldung: 18.10.2006
(73) Patentinhaber: Volkswagen Aktiengesellschaft, 38436 Wolfsburg (DE)
(72) Erfinder: Eichhorn, Oliver, 38106 Braunschweig (DE); Blosat, Ulf, 38559 Wagenhoff (DE); Kreiling, Jan, 38104 Braunschweig (DE)
(74) Vertreter: Graefe, Jörg

(56) Entgegenhaltungen:
- DE-A1- 19 533 157
- DE-A1- 19 542 109
- US-A1- 2002 140 254
- US-A1- 2003 020 302
- PATENT ABSTRACTS OF JAPAN Bd. 1998, Nr. 14, 31. Dezember 1998 (1998-12-31) -& JP 10 250490 A (NISSAN MOTOR CO LTD), 22. September 1998 (1998-09-22)
- PATENT ABSTRACTS OF JAPAN Bd. 1997, Nr. 01, 31. Januar 1997 (1997-01-31) & JP 08 225045 A (SUZUKI MOTOR CORP), 3. September 1996 (1996-09-03)

## Beschreibung

Die vorliegende Erfindung betrifft eine Dachrelinganordnung für ein Fahrzeug, die mindestens eine Dachreling und mindestens eine Befestigungseinrichtung umfasst, geeignet, die mindestens eine Dachreling abschnittsweise an einem Fahrzeugdach zu befestigen. Weiterhin betrifft die vorliegende Erfindung ein Fahrzeug. Des Weiteren betrifft die vorliegende Erfindung ein Verfahren zur Herstellung einer Dachrelinganordnung.

Dachrelinganordnungen der eingangs genannten Art sind aus dem Stand der Technik in verschiedenen Ausführungsformen bereits bekannt.

Beispielsweise offenbart die deutsche Offenlegungsschrift DE 197 13 781 A1 eine Dachreling für Fahrzeuge mit einem von Stützfüßen getragenen Holm und mit einer jedem Stützfuß zugeordneten Befestigungseinrichtung zur Befestigung der Dachreling an einer sich unterhalb der Dachhaut des Fahrzeugs im Wesentlichen in horizontaler Richtung erstreckenden Tragestruktur. Es hat sich gezeigt, dass eine Montage einer derartigen Dachreling an einem Fahrzeugdach relativ kompliziert sein kann. Insbesondere ist ein Toleranzausgleich in vertikaler Richtung bei der Befestigung der Dachreling nur sehr aufwändig realisierbar.

Aus der US 2003/020302 A1 ist eine Dachrelinganordnung für ein Kraftfahrzeug mit einer Dachreling und einer Befestigungseinrichtung bekannt, mittels derer die Dachreling am Fahrzeugdach befestigt werden kann. Die Befestigungseinrichtung weist einen ersten Flansch auf, der an einer Innenseite des Fahrzeugdachs angebracht ist. Darüber hinaus ist ein zweiter Flansch vorgesehen, der sich nach der Montage der Befestigungseinrichtung im Wesentlichen in vertikaler Richtung karosserieeinwärts erstreckt und abschnittsweise an einem Zusammenbau-Seitenteil angebracht ist. Die Verbindung des zweiten Flanschs mit dem Zusammenbau-Seitenteil wird durch Schraubverbindungen erreicht. Konstruktiv ähnlich ausgeführte Dachrelinganordnungen sind aus der US 2002/140254 A1, der DE 195 33 157 A1, der JP 10-250490 A, der JP 08225045 A sowie der DE 195 42 109 A1 bekannt. Ein Nachteil der aus dem Stand der Technik bekannten Lösungen, bei denen Schraubverbindungen zur Verbindung des zweiten Flanschs mit dem Zusammenbau-Seitenteil eingesetzt werden, besteht darin, dass die Montage der Dachrelinganordnung vergleichsweise aufwändig ist.

Insbesondere müssen die Schraubverbindungen des zweiten Flanschs mit dem Zusammenbau-Seitenteil besonders sorgfältig gesetzt werden.

Hier setzt die vorliegende Erfindung an.

Der vorliegenden Erfindung liegt die Aufgabe zugrunde, eine Dachrelinganordnung der eingangs genannten Art zur Verfügung zu stellen, die einfach und kostengünstig aufgebaut ist und insbesondere auch einen vertikalen Toleranzausgleich bei der Montage der Dachreling ermöglicht. Weiterhin liegt der vorliegenden Erfindung die Bereitstellung eines Fahrzeugs mit einer derartigen Dachrelinganordnung zugrunde. Darüber hinaus liegt der vorliegenden Erfindung die Aufgabe zugrunde, ein kostengünstiges Verfahren zur Herstellung einer Dachrelinganordnung anzugeben.

Diese Aufgabe wird hinsichtlich der Dachrelinganordnung durch die Merkmale des Anspruchs 1, hinsichtlich des Fahrzeugs durch die Merkmale des Anspruch 14 sowie hinsichtlich des Verfahrens durch ein Verfahren mit den Merkmalen des Anspruchs 15 gelöst. Die Unteransprüche betreffen bevorzugte Weiterbildungen der Erfindung.

Gemäß Anspruch 1 ist vorgesehen, dass die mindestens eine Befestigungseinrichtung einen ersten Flansch, der an einer Innenseite des Fahrzeugdachs angebracht ist, und einen zweiten Flansch, der sich nach der Montage der Befestigungseinrichtung im Wesentlichen in vertikaler Richtung karosserieeinwärts erstreckt und mindestens abschnittsweise an einem Zusammenbau-Seitenteil angebracht ist, aufweist. Erfindungsgemäß ist der zweite Flansch mittels einer Schweißverbindung am Zusammenbau-Seitenteil angebracht. Beispielsweise kann durch CO₂-Schweißen eine stoffschlüssige Schweißverbindung zwischen dem zweiten Flansch und dem Zusammenbau-Seitenteil hergestellt werden. Mit Hilfe des zweiten Flansches der Befestigungseinrichtung, der sich nach der Montage im Wesentlichen in vertikaler Richtung karosserieeinwärts und somit nach unten erstreckt, kann auf einfache Weise ein Fügen unter Berücksichtigung eines vertikalen Toleranzausgleichs bei variierenden Passungen des Fahrzeugdachs im Bezug auf das Zusammenbau-Seitenteil erreicht werden. Die Befestigungseinrichtung, die vorzugsweise aus Metall hergestellt ist, besitzt darüber hinaus einen relativ einfachen Aufbau, so dass die Befestigungseinrichtung insbesondere auch automatisiert und damit auch kostengünstig hergestellt werden kann.

Gemäß einer bevorzugten Ausführungsform wird vorgeschlagen, dass der erste Flansch unlösbar an der Innenseite des Fahrzeugdachs angebracht ist. Auf diese Weise kann eine stabile und dauerhafte Befestigung des ersten Flansches der Befestigungseinrichtung an der Innenseite des Fahrzeugdachs erreicht werden.

Um einen Wärmeverzug im Fahrzeugdach zu vermeiden, ist es bevorzugt, kalte Verbindungsverfahren einzusetzen, um die unlösbare Verbindung des ersten Flansches mit der Innenseite des Fahrzeugdachs herzustellen.

Es kann dabei in einer vorteilhaften Ausführungsform vorgesehen sein, dass der erste Flansch der Befestigungseinrichtung mittels mindestens einer Klebeverbindung an der Innenseite des Fahrzeugdachs angebracht ist.

Gemäß einer vorteilhaften alternativen Variante wird vorgeschlagen, dass der erste Flansch der Befestigungseinrichtung mittels mindestens einer Lötverbindung an der Innenseite des Fahrzeugdachs angebracht ist.

Bei diesen beiden Alternativen treten allenfalls geringe lokale Temperaturerhöhungen im Fahrzeugdach auf, die jedoch keinen Wärmeverzug des Fahrzeugdachs zur Folge haben.

Es kann in einer besonders vorteilhaften Ausführungsform auch vorgesehen sein, dass der erste Flansch der Befestigungseinrichtung mittels mindestens einer Nietverbindung an der Innenseite des Fahrzeugdachs angebracht ist. Nietverbindungen lassen sich relativ einfach und kostengünstig herstellen.

Gemäß einer bevorzugten Ausführungsform ist an einer Unterseite des ersten Flansches eine Mutter angebracht, in die bei der Montage der Dachreling eine Montageschraube oder dergleichen eingreifen kann. In dieser Ausführungsform kann die Dachreling bei ihrer Montage mit Hilfe der Montageschraube, deren Schraubenkopf im Inneren der Dachreling angeordnet ist, auf einfache Weise von außen mit der Mutter verschraubt und damit endgültig fixiert werden.

Vorzugsweise ist die Mutter mittels einer Schweißverbindung an der Unterseite des ersten Flansches angebracht.

Gemäß einer alternativen Ausführungsform ist im Inneren der Dachreling eine Mutter angebracht, in die bei der Montage der Dachreling eine Montageschraube oder dergleichen eingreifen kann. In dieser Ausführungsform kann die Dachreling somit von Innen, das heißt, mit einem an der Unterseite des ersten Flansches anliegenden Schraubenkopf montiert werden.

Vorzugsweise ist die Mutter mittels einer Schweißverbindung im Inneren der Dachreling angebracht.

In einer vorteilhaften Ausführungsform wird vorgeschlagen, dass der zweite Flansch der Befestigungseinrichtung an einem der Innenseite des Fahrzeugdachs zugewandten oberen Abschnitt des Zusammenbau-Seitenteils unlösbar angebracht ist. Auf diese Weise kann die korrekte Position des zweiten Flansches und des Zusammenbau-Seitenteils auf besonders einfache Art und Weise fixiert werden.

Gemäß einer besonders vorteilhaften Ausführungsform erstreckt sich der obere Abschnitt des Zusammenbau-Seitenteils im Wesentlichen parallel zum zweiten Flansch der Befestigungseinrichtung in vertikaler Richtung. Dadurch kann das Fügen unter Berücksichtigung des vertikalen Toleranzausgleichs bei variierenden Passungen des Fahrzeugdachs in Bezug auf das Zusammenbau-Seitenteil weiter vereinfacht werden.

Gemäß einer bevorzugten Ausführungsform weist der zweite Flansch mindestens ein Langloch auf, geeignet, durch Lochschweißen abschnittsweise eine stoffschlüssige Verbindung zwischen dem zweiten Flansch und dem oberen Abschnitt des Zusammenbau-Seitenteils herzustellen.

Gemäß einer besonders vorteilhaften Ausführungsform weist der zweite Flansch ein unteres Ende auf, das abschnittsweise aufgeweitet ist. Dieses untere Ende, das sich nach der Montage von der Innenseite des Fahrzeugdachs weg erstreckt, kann insbesondere das Einfädeln des Fahrzeugdachs zusammen mit der daran angebrachten Dachreling beim Aufsetzen auf das Zusammenbau-Seitenteil erleichtern.

Das erfindungsgemäße Verfahren zur Herstellung einer Dachrelinganordnung weist die nachfolgenden Verfahrensschritte auf:
- ein erster Flansch mindestens einer Befestigungseinrichtung wird an einer Innenseite eines Fahrzeugdachs angebracht;
- eine Dachreling wird mittels mindestens einer Montageschraube oder dergleichen und mindestens einer Mutter abschnittsweise am Fahrzeugdach befestigt;
- ein zweiter Flansch der Befestigungseinrichtung, der sich nach der Montage im Wesentlichen in vertikaler Richtung karosserieeinwärts erstreckt, wird abschnittsweise mit einem Zusammenbau-Seitenteil verbunden;
wobei der zweite Flansch der Befestigungseinrichtung mit einem oberen Abschnitt des Zusammenbau-Seitenteils, der sich im Wesentlichen parallel zum zweiten Flansch der Befestigungseinrichtung erstreckt, durch Schweißen, insbesondere durch CO₂-Schweißen, mindestens abschnittsweise unlösbar verbunden wird.

Das erfindungsgemäße Verfahren ermöglicht eine einfache und damit kostengünstige Herstellung der Dachrelinganordnung, die insbesondere auch automatisiert erfolgen kann.

Vorzugsweise wird der erste Flansch unlösbar an der Innenseite des Fahrzeugdachs angebracht.

In einer vorteilhaften Ausführungsform wird der erste Flansch der Befestigungseinrichtung mindestens abschnittsweise an die Unterseite des Fahrzeugdachs geklebt.

Gemäß einer alternativen vorteilhaften Ausführungsform wird der erste Flansch der Befestigungseinrichtung mindestens abschnittsweise an die Unterseite des Fahrzeugdachs gelötet.

Es kann auch vorgesehen sein, dass der erste Flansch der Befestigungseinrichtung mindestens abschnittsweise an die Unterseite des Fahrzeugdachs genietet wird.

Diese vorstehend genannten Ausführungsformen können bei der Montage der Befestigungseinrichtung einen Wärmeverzug im Fahrzeugdach verhindern. Die Befestigungseinrichtung kann unmittelbar und damit auch automatisiert an der Innenseite des Fahrzeugdachs angebracht werden.

In einer vorteilhaften Ausführungsform wird vorgeschlagen, dass die Mutter an einer Unterseite des ersten Flansches angeschweißt wird. In dieser Ausführungsform kann die Dachreling von einer Außenseite des Fahrzeugdachs angeschraubt werden.

In einer alternativen Ausführungsform wird vorgeschlagen, dass die Mutter im Inneren der Dachreling angeschweißt wird. In dieser Ausführungsform kann die Dachreling von einer Innenseite des Fahrzeugdachs angeschraubt werden.

Gemäß einer besonders bevorzugten Ausführungsform wird vorgeschlagen, dass der zweite Flansch der Befestigungseinrichtung mit einem oberen Abschnitt des Zusammenbau-Seitenteils, der sich im Wesentlichen parallel zum zweiten Flansch der Befestigungseinrichtung in vertikaler Richtung erstreckt, mindestens abschnittsweise unlösbar verbunden wird.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Querschnittsansicht einer Dachrelinganordnung für ein Fahrzeug gemäß einer ersten Ausführungsform der vorliegenden Erfindung:
- Fig. 2: eine Querschnittsansicht einer Dachrelinganordnung für ein Fahrzeug gemäß einer zweiten Ausführungsform der vorliegenden Erfindung.

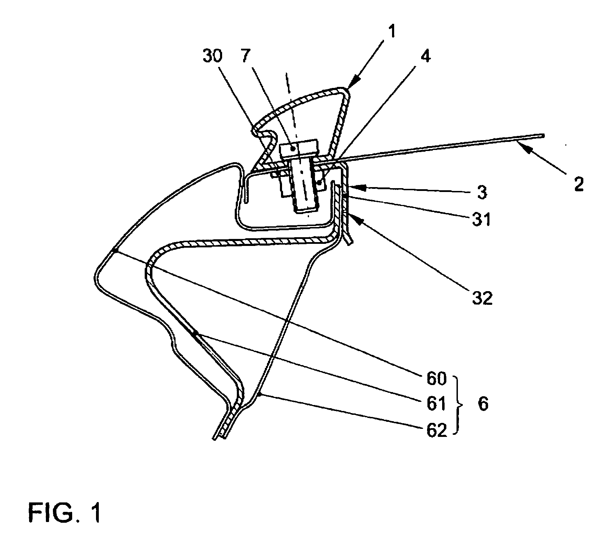

Zunächst wird auf Fig. 1 Bezug genommen, in der eine erfindungsgemäße Dachrelinganordnung gemäß einer ersten Ausführungsform der vorliegenden Erfindung im Querschnitt dargestellt ist. Dabei ist in Fig. 1 die Anbindung einer Dachreling 1 in einem in Fahrzeuglängsrichtung betrachtet vorderen Bereich eines Fahrzeugdachs 2 gezeigt. Weitere Anbindungen der Dachreling 1 - beispielsweise in einem in Fahrzeuglängsrichtung betrachtet mittleren oder hinteren Bereich des Fahrzeugdachs 2 - sind im Rahmen dieser Figurenbeschreibung nicht explizit gezeigt. Diese Anbindungen sind jedoch vorzugsweise so aufgebaut wie die vordere Anbindung der Dachreling 1, die nachfolgend beschrieben wird.

Die Dachreling 1 ist mit Hilfe einer Befestigungseinrichtung 3 an einer Außenseite des Fahrzeugdachs 2 angebracht. Die Befestigungseinrichtung 3, die vorzugsweise aus Metall hergestellt ist, umfasst einen ersten Flansch 30 und einen zweiten Flansch 31. Der erste Flansch 30 wird bei der Montage der Befestigungseinrichtung 3 vorzugsweise unlösbar mit einer Innenseite des Fahrzeugdachs 2 verbunden. Dabei sind kalte Fügeverfahren wie zum Beispiel das Kleben oder das Löten bevorzugt, damit ein Wärmeverzug im Fahrzeugdach 2, der unter Umständen bei anderen aus dem Stand der Technik bekannten Fügeverfahren auftreten kann, vermieden werden kann. Der erste Flansch 30 kann beispielsweise auch an die Innenseite des Fahrzeugdachs 2 genietet werden.

Man erkennt, dass an einer Unterseite des ersten Flansches 30 der Befestigungseinrichtung 3 eine Mutter 4 angebracht ist. Vorzugsweise ist die Mutter 4 an der Unterseite des ersten Flansches angeschweißt. Die Dachreling 1 ist mittels einer Montageschraube 7, die bei der Montage von außen durch entsprechende Bohrungen der Dachreling 1, des Fahrzeugdachs 2 und des ersten Flansches 30 geführt wird und in die Mutter 4 eingreifen und darin festgezogen werden kann, mit dem ersten Flansch 30 der Befestigungseinrichtung 3 verbunden.

Der zweite Flansch 31 der Befestigungseinrichtung 3 ist in der Weise vom ersten Flansch 30 abgewinkelt, dass er sich nach der Montage im Wesentlichen in vertikaler Richtung karosserieeinwärts erstreckt. Man erkennt, dass der zweite Flansch 31 an einem unteren Ende aufgeweitet ist, um die Montage des Fahrzeugdachs 2 zusammen mit der daran angebrachten Dachreling 1 beim Aufsetzen auf ein Zusammenbau-Seitenteil 6 zu vereinfachen.

Das Zusammenbau-Seitenteil 6, das die gesamte Anordnung seitlich stabilisiert, umfasst in diesem Ausführungsbeispiel ein äußeres Seitenteil 60, ein mittleres Seitenteil 61 und ein inneres Seitenteil 62. Man erkennt, dass die drei Seitenteile 60, 61, 62 des Zusammenbau-Seitenteils 6 in einem oberen Abschnitt, welcher der Innenseite des Fahrzeugdachs 2 zugewandt ist, und in einem unteren Abschnitt abschnittsweise unlösbar miteinander verbunden, insbesondere miteinander verschweißt oder verklebt sind.

Der obere Abschnitt des Zusammenbau-Seitentell 6, der an den zweiten Flansch 31 der Befestigungseinrichtung 3 angrenzt, erstreckt sich abschnittsweise ebenfalls im Wesentlichen in vertikaler Richtung, und zwar parallel zum zweiten Flansch 31 der Befestigungseinrichtung 3. Der vertikale Abschnitt des Zusammenbau-Seitenteils 6 sowie der nach der Montage der Befestigungseinrichtung 3 im Wesentlichen parallel dazu orientierte, sich in vertikaler Richtung erstreckende zweite Flansch 31 der Befestigungseinrichtung 3 ermöglichen ein Fügen unter Berücksichtigung eines vertikalen Toleranzausgleichs bei variierenden Passungen des Fahrzeugdachs 2 relativ zum Zusammenbau-Seitenteil 6.

Der zweite Flansch 31 der Befestigungseinrichtung 3 weist in diesem Ausführungsbeispiel ein Langloch 32 auf, so dass bei der Montage der erfindungsgemäßen Dachrelinganordnung durch Lochschweißen eine stoffschlüssige und vor allem unlösbare Verbindung zwischen dem zweiten Flansch 31 der Befestigungseinrichtung 3 und dem der Unterseite des Fahrzeugdachs 2 zugewandten Abschnitt des Zusammenbau-Seitenteils 6 hergestellt werden kann. Die korrekte Position des Zusammenbau-Seitenteils 6 und des zweiten Flansches 31 relativ zueinander wird dabei vorzugsweise mittels einer Schweißverbindung, insbesondere mittels einer CO₂-Schweißverbindung, fixiert.

Ein horizontaler Toleranzausgleich ist im Allgemeinen nicht erforderlich. Etwaige kleine horizontale Spalte zwischen der Befestigungseinrichtung 3 und dem Zusammenbau-Seitenteil 6 können mit Hilfe der Schweißverbindung ausgeglichen werden.

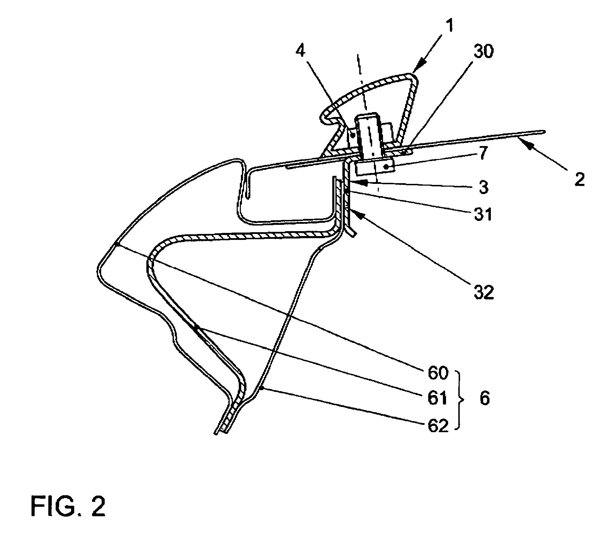

Unter Bezugnahme auf Fig. 2 ist dort eine Dachrelinganordnung gemäß einer zweiten Ausführungsform der vorliegenden Erfindung im Querschnitt gezeigt.

Die Dachreling 1 weist im Unterschied zum ersten Ausführungsform eine im Inneren an der Unterseite der Dachreling 1 angebrachte Mutter 4 auf. Die Mutter 4 ist dort orzugsweise angeschweißt. An der Innenseite des Fahrzeugdachs 2 ist wiederum die Befestigungseinrichtung 3, die vorzugsweise aus Metall hergestellt ist, unlösbar angebracht. Die Befestigungseinrichtung 3 umfasst dazu einen ersten Flansch 30, der an der Unterseite des Fahrzeugdachs 2 unlösbar angebracht ist. Im Gegensatz zum ersten Ausführungsbeispiel, in dem der erste Flansch 30 dem äußeren Seitenteil 60 zugewandt ist, erstreckt sich in diesem Ausführungsbeispiel der erste Flansch 30 vom äußeren Seitenteil 60 des Zusammenbau-Seitenteils 6 weg. Vorzugsweise ist die Befestigungseinrichtung 3, wie bereits im Zusammenhang mit dem ersten Ausführungsbeispiel erwähnt, an die Innenseite des Fahrzeugdachs 2 geklebt, gelötet oder genietet, um einen Wärmeverzug im Fahrzeugdach 2, der unter Umständen bei höheren Temperaturen auftreten kann, zu vermeiden.

Im Gegensatz zum ersten Ausführungsbeispiel ist in diesem Ausführungsbeispiel die Dachreling 1 von innen mit dem Fahrzeugdach 2 verschraubt. Eine Montageschraube 7 wird bei der Montage der Dachreling 1 von einer Unterseite des Fahrzeugdachs 2 durch eine Bohrung des ersten Flansches 30, eine Bohrung des Fahrzeugdachs 2 und eine Bohrung der Dachreling 1 geführt und greift dann in die im Inneren der Dachreling 1 angeordnete Mutter 4 ein.

Die Befestigungseinrichtung umfasst darüber hinaus einen zweiten Flansch 31, der bezüglich des ersten Flansches 30 derart abgewinkelt ist, dass er sich nach der Montage der Befestigungseinrichtung 3 von der Unterseite des Fahrzeugdachs 4 im Wesentlichen in vertikaler Richtung karosserieeinwärts nach unten erstreckt. Der zweite Flansch 31 ist an einem unteren Ende aufgeweitet, um die Montage des Fahrzeugdachs 4 zusammen mit der daran montierten Dachreling 1 zu erleichtern.

Der Aufbau des zusammenbau-Seitenteils 6, der ein äußeres Seitenteil 60, ein mittleres Seitenteil 61 sowie ein inneres Seitenteil 62 aufweist, welche abschnittsweise miteinander verschweißt sind, entspricht demjenigen des ersten Ausführungsbeispiels, so dass darauf nicht weiter eingegangen werden soll.

Der obere Abschnitt des Zusammenbau-Seitenteil 6, der an den zweiten Flansch 31 der Befestigungseinrichtung 3 angrenzt, erstreckt sich auch in diesem Ausführungsbeispiel abschnittsweise parallel zum zweiten Flansch 31 der Befestigungseinrichtung 3 im Wesentlichen in vertikaler Richtung. Der vertikale Abschnitt des Zusammenbau-Seitenteils 6 sowie der nach der Montage der Befestigungseinrichtung im Wesentlichen parallel dazu orientierte, sich in vertikaler Richtung erstreckende zweite Flansch 31 der Befestigungseinrichtung 3 ermöglichen auch in diesem Ausführungsbeispiel ein Fügen unter Berücksichtigung eines vertikalen Toleranzausgleichs bei variierenden Passungen des Fahrzeugdachs 2 relativ zum Zusammenbau-Seitenteil 6.

Der zweite Flansch 31 der Befestigungseinrichtung 3 weist ein Langloch 32 auf, so dass bei der Montage der Dachrelinganordnung durch Lochschweißen eine unlösbare stoffschlüssige Verbindung zwischen dem zweiten Flansch 31 der Befestigungseinrichtung 3 und dem der Unterseite des Fahrzeugdachs 2 zugewandten Abschnitt des Zusammenbau-Seitenteils 6 hergestellt werden kann. Die korrekte Position des Zusammenbau-Seitenteils 6 und des zweiten Flansches 31 relativ zueinander wird dabei vorzugsweise mittels einer Schweißverbindung, insbesondere mittels einer CO₂ - Schweißverbindung, fixiert.

Man erkennt, dass bei den in den beiden Ausführungsbeispielen gezeigten Dachrellnganordnungen mit Hilfe der Befestigungseinrichtung 3 ein vertikaler Toleranzausgleich auf relativ einfache Art und Weise hergestellt werden kann. Dieser vertikale Toleranzausgleich erlaubt ein direktes und somit automatisierbares Anbringen der Befestigungseinrichtung 3 an der Unterseite des Fahrzeugdachs 3. Die Befestigungseinrichtung 3 hat darüber hinaus einen relativ einfachen Aufbau und ist damit einfach und kostengünstig herstellbar, Insbesondere kann die Befestigungseinrichtung automatisiert gefertigt und verbaut werden. Da die Befestigungseinrichtung 3 vorzugsweise aus Metall hergestellt ist, ist sie relativ gut weiderverwertbar. Aufgrund des verhältnismäßig geringen Bauraums der Befestigungseinrichtung 3 ergeben sich darüber hinaus auch Packungsvorteile.

### BEZUGSZEICHENLISTE

- 1: Dachreling
- 2: Fahrzeugdach
- 3: Befestigungseinrichtung
- 4: Mutter
- 6: Zusammenbau-Seitenteil
- 7: Montageschraube

- 30: erster Flansch
- 31: zweiter Flansch
- 32: Langloch

- 60: äußeres Seitenteil
- 61: mittleres Seitenteil
- 62: inneres Seitenteil

## Patentansprüche

1. Dachrelinganordnung für ein Fahrzeug umfassend:
- mindestens eine Dachreling (1),
- mindestens eine Befestigungseinrichtung (3), geeignet, die mindestens eine Dachreling (1) abschnittsweise an einem Fahrzeugdach (2) zu befestigen;
wobei die mindestens eine Befestigungseinrichtung (3) mindestens einen ersten Flansch (30), der an einer Innenseite des Fahrzeugdachs (2) angebracht ist, und einen zweiten Flansch (31), der sich nach der Montage der Befestigungseinrichtung (3) im Wesentlichen in vertikaler Richtung karosserieeinwärts erstreckt und mindestens abschnittsweise an einem Zusammenbau-Seitenteil (6) angebracht ist, aufweist, **dadurch gekennzeichnet, dass** der zweite Flansch (31) mittels einer Schweißverbindung am Zusammenbau-Seitenteil (6) angebracht ist.

2. Dachrelinganordnung nach Anspruch 1, **dadurch gekennzeichnet, dass** der erste Flansch (30) unlösbar an der Innenseite des Fahrzeugdachs (2) angebracht ist.

3. Dachrelinganordnung nach Anspruch 1 oder 2, **dadurch gekennzeichnet, dass** der erste Flansch (30) mittels mindestens einer Klebeverbindung an der Innenseite des Fahrzeugdachs (2) angebracht ist.

4. Dachrelinganordnung nach einem der Ansprüche 1 bis 3, **dadurch gekennzeichnet, dass** der erste Flansch (30) mittels mindestens einer Lötverbindung an der Innenseite des Fahrzeugdachs (2) angebracht ist.

5. Dachrelinganordnung nach einem der Ansprüche 1 bis 4, **dadurch gekennzeichnet, dass** der erste Flansch (30) mittels mindestens einer Nietverbindung an der Innenseite des Fahrzeugdachs (2) angebracht ist

6. Dachrelinganordnung nach einem der Ansprüche 1 bis 5, **dadurch gekennzeichnet, dass** an einer Unterseite des ersten Flansches (30) eine Mutter (4) angebracht ist, in die bei der Montage der Dachreling (1) eine Montageschraube (7) oder dergleichen eingreifen kann.

7. Dachrelinganordnung nach Anspruch 6, **dadurch gekennzeichnet, dass** die Mutter (4) mittels einer Schweißverbindung an der Unterseite des ersten Flansches (30) angebracht ist.

8. Dachrelinganordnung nach einem der Ansprüche 1 bis 7, **dadurch gekennzeichnet, dass** im Inneren der Dachreling (1) eine Mutter (4) angeordnet ist, in die bei der Montage der Dachreling (1) eine Montageschraube (7) oder dergleichen eingreifen kann.

9. Dachrelinganordnung nach Anspruch 8, **dadurch gekennzeichnet, dass** die Mutter (4) mittels einer Schweißverbindung im Inneren der Dachreling (1) angebracht ist.

10. Dachrelinganordnung nach einem der Ansprüche 1 bis 9, **dadurch gekennzeichnet, dass** der zweite Flansch (31) an einem der Innenseite des Fahrzeugdachs (2) zugewandten oberen Abschnitt des Zusammenbau-Seitenteils (6) unlösbar angebracht ist.

11. Dachrelinganordnung nach Anspruch 10, **dadurch gekennzeichnet, dass** sich der obere Abschnitt des Zusammenbau-Seitenteils (6) im Wesentlichen parallel zum zweiten Flansch (31) der Befestigungseinrichtung (3) in vertikaler Richtung erstreckt.

12. Dachrelinganordnung nach einem der Ansprüche 1 bis 11, **dadurch gekennzeichnet, dass** der zweite Flansch (31) mindestens ein Langloch (32) aufweist, geeignet, durch Lochschweißen abschnittsweise eine stoffschlüssige Verbindung zwischen dem zweiten Flansch (31) und dem oberen Abschnitt des Zusammenbau-Seitenteils (6) herzustellen.

13. Dachrelinganordnung nach einem der Ansprüche 1 bis 12, **dadurch gekennzeichnet, dass** der zweite Flansch (31) ein unteres Ende aufweist, das abschnittsweise aufgeweitet ist.

14. Fahrzeug, umfassend mindestens eine Dachrelinganordnung nach einem der Ansprüche 1 bis 13.

15. Verfahren zur Herstellung einer Dachrelinganordnung nach einem der Ansprüche 1 bis 13, wobei
- ein erster Flansch (30) mindestens einer Befestigungseinrichtung (3) an einer Innenseite eines Fahrzeugdachs (2) angebracht wird;
- eine Dachreling (1) mittels mindestens einer Montageschraube (7) oder dergleichen und mindestens einer Mutter (4) abschnittsweise am Fahrzeugdach (2) befestigt wird;
- ein zweiter Flansch (31) der Befestigungseinrichtung (3), der sich nach der Montage im Wesentlichen in vertikaler Richtung karosserieeinwärts erstreckt, abschnittsweise mit einem Zusammenbau-Seitenteil (6) verbunden wird, **dadurch gekennzeichnet, dass** der zweite Flansch (31) der Befestigungseinrichtung (3) mit einem oberen Abschnitt des Zusammenbau-Seitenteils (6), der sich im Wesentlichen parallel zum zweiten Flansch (31) der Befestigungseinrichtung (3) erstreckt, durch Schweißen, insbesondere durch CO₂-Schweißen, mindestens abschnittsweise unlösbar verbunden wird.

16. Verfahren nach Anspruch 15, **dadurch gekennzeichnet, dass** der erste Flansch (30) der Befestigungseinrichtung (3) mindestens abschnittsweise an die Innenseite des Fahrzeugdachs (2) geklebt wird.

17. Verfahren nach Anspruch 15 oder 16, **dadurch gekennzeichnet, dass** der erste Flansch (30) der Befestigungseinrichtung (3) mindestens abschnittsweise an die Innenseite des Fahrzeugdachs (2) gelötet wird.

18. Verfahren nach einem der Ansprüche 15 bis 17, **dadurch gekennzeichnet, dass** der erste Flansch (30) der Befestigungseinrichtung (3) mindestens abschnittsweise an die Innenseite des Fahrzeugdachs (2) genietet wird.

19. Verfahren nach einem der Ansprüche 15 bis 18, **dadurch gekennzeichnet, dass** die Mutter (4) an einer Unterseite des ersten Flanschs (30) angeschweißt wird.

20. Verfahren nach einem der Ansprüche 15 bis 19, **dadurch gekennzeichnet, dass** die Mutter (4) im Inneren der Dachreling (1) angeschweißt wird.

## Claims

1. Roof rail arrangement for a vehicle, comprising:
- at least one roof rail (1),
- at least one fastening device (3) suitable for fastening the at least one roof rail (1) in certain portions to a vehicle roof (2);
wherein the at least one fastening device (3) has at least a first flange (30) which is fixed to an inner side of the vehicle roof (2), and a second flange (31) which extends inwards of the vehicle body substantially in a vertical direction after the fastening device (3) has been mounted and which is fixed, at least in certain portions, to a lateral assembly part (6), **characterized in that** the second flange (31) is fixed to the lateral assembly part (6) by means of a welded connection.

2. Roof rail arrangement according to claim 1, **characterized in that** the first flange (30) is fixed non-removably to the inner side of the vehicle roof (2).

3. Roof rail arrangement according to claim 1 or 2, **characterized in that** the first flange (30) is fixed to the inner side of the vehicle roof (2) by means of at least one adhesive connection.

4. Roof rail arrangement according to one of claims 1 to 3, **characterized in that** the first flange (30) is fixed to the inner side of the vehicle roof (2) by means of at least one brazed connection.

5. Roof rail arrangement according to one of claims 1 to 4, **characterized in that** the first flange (30) is fixed to the inner side of the vehicle roof (2) by means of at least one riveted connection.

6. Roof rail arrangement according to one of claims 1 to 5, **characterized in that** a nut (4) is fixed to an underside of the first flange (30) and a mounting bolt (7) or the like can engage in this nut when mounting the roof rail (1).

7. Roof rail arrangement according to claim 6, **characterized in that** the nut (4) is fixed to the underside of the first flange (30) by means of a welded connection.

8. Roof rail arrangement according to one of claims 1 to 7, **characterized in that** a nut (4) is arranged inside the roof rail (1) and a mounting bolt (7) or the like can engage in this nut when mounting the roof rail (1).

9. Roof rail arrangement according to claim 8, **characterized in that** the nut (4) is fixed inside the roof rail (1) by means of a welded connection.

10. Roof rail arrangement according to one of claims 1 to 9, **characterized in that** the second flange (31) is fixed non-removably to an upper portion of the lateral assembly part (6) that is directed towards the inner side of the vehicle roof (2).

11. Roof rail arrangement according to claim 10, **characterized in that** the upper portion of the lateral assembly part (6) extends substantially parallel to the second flange (31) of the fastening device (3) in a vertical direction.

12. Roof rail arrangement according to one of claims 1 to 11, **characterized in that** the second flange (31) has at least one slot (32) suitable for producing, in certain portions, an integrally bonded connection between the second flange (31) and the upper portion of the lateral assembly part (6) by means of slot welding.

13. Roof rail arrangement according to one of claims 1 to 12, **characterized in that** the second flange (31) has a lower end which is flared in certain portions.

14. Vehicle comprising at least one roof rail arrangement according to one of claims 1 to 13.

15. Method of producing a roof rail arrangement according to one of claims 1 to 13, wherein
- a first flange (30) of at least one fastening device (3) is fixed to an inner side of a vehicle roof (2);
- a roof rail (1) is fastened in certain portions to the vehicle roof (2) by means of at least one mounting bolt (7) or the like and at least one nut (4);
- a second flange (31) of the fastening device (3), which extends inwards of the vehicle body substantially in a vertical direction after the mounting operation, is connected in certain portions to a lateral assembly part (6),
**characterized in that** the second flange (31) of the fastening device (3) is connected non-removably, at least in certain portions, by welding, in particular by CO₂ welding, to an upper portion of the lateral assembly part (6) that extends substantially parallel to the second flange (31) of the fastening device (3).

16. Method according to Claim 15, **characterized in that** the first flange (30) of the fastening device (3) is adhesively bonded, at least in certain portions, to the inner side of the vehicle roof (2).

17. Method according to Claim 15 or 16, **characterized in that** the first flange (30) of the fastening device (3) is brazed, at least in certain portions, to the inner side of the vehicle roof (2).

18. Method according to one of Claims 15 to 17, **characterized in that** the first flange (30) of the fastening device (3) is riveted, at least in certain portions, to the inner side of the vehicle roof (2).

19. Method according to one of Claims 15 to 18, **characterized in that** the nut (4) is welded to an underside of the first flange (30).

20. Method according to one of Claims 15 to 19, **characterized in that** the nut (4) is welded on inside the roof rail (1).

## Revendications

1. Agencement de rail de toit pour un véhicule, comprenant:
- au moins un rail de toit (1),
- au moins un dispositif de fixation (3), apte à fixer l'au moins un rail de toit (1) par parties à un toit de véhicule (2);
dans lequel l'au moins un dispositif de fixation (3) présente au moins une première bride (30), qui est montée sur une face intérieure du toit de véhicule (2), et une deuxième bride (31), qui s'étend après le montage du dispositif de fixation (3) essentiellement en direction verticale vers l'intérieur de la carrosserie et qui est montée au moins par parties sur une pièce latérale composée (6), **caractérisé en ce que** la deuxième bride (31) est montée au moyen d'un assemblage soudé sur la pièce latérale composée (6).

2. Agencement de rail de toit selon la revendication 1, **caractérisé en ce que** la première bride (30) est montée de manière inséparable sur la face intérieure du toit de véhicule (2).

3. Agencement de rail de toit selon la revendication 1 ou 2, **caractérisé en ce que** la première bride (30) est montée sur la face intérieure du toit de véhicule (2) au moyen d'au moins un assemblage collé.

4. Agencement de rail de toit selon l'une quelconque des revendications 1 à 3, **caractérisé en ce que** la première bride (30) est montée sur la face intérieure du toit de véhicule (2) au moyen d'au moins un assemblage brasé.

5. Agencement de rail de toit selon l'une quelconque des revendications 1 à 4**, caractérisé en ce que** la première bride (30) est montée sur la face intérieure du toit de véhicule (2) au moyen d'au moins un assemblage rivé.

6. Agencement de rail de toit selon l'une quelconque des revendications 1 à 5, **caractérisé en ce qu'**un écrou (4) est monté sur la face inférieure de la première bride (30), dans lequel une vis de montage (7) ou analogue peut s'engager lors du montage du rail de toit (1).

7. Agencement de rail de toit selon la revendication 6, **caractérisé en ce que** l'écrou (4) est monté sur la face inférieure de la première bride (30) au moyen d'un assemblage soudé.

8. Agencement de rail de toit selon l'une quelconque des revendications 1 à 7, **caractérisé en ce qu'**un écrou (4) est disposé à l'intérieur du rail de toit (1), et dans lequel une vis de montage (7) ou analogue peut s'engager lors du montage du rail de toit (1).

9. Agencement de rail de toit selon la revendication 8, **caractérisé en ce que** l'écrou (4) est monté à l'intérieur du rail de toit (1) au moyen d'un assemblage soudé.

10. Agencement de rail de toit selon l'une quelconque des revendications 1 à 9, **caractérisé en ce que** la deuxième bride (31) est montée de manière inséparable sur une partie supérieure de la pièce latérale composée (6) tournée vers la face intérieure du toit de véhicule (2).

11. Agencement de rail de toit selon la revendication 10, **caractérisé en ce que** la partie supérieure de la pièce latérale composée (6) s'étend en direction verticale de façon essentiellement parallèle à la deuxième bride (31) du dispositif de fixation (3).

12. Agencement de rail de toit selon l'une quelconque des revendications 1 à 11, **caractérisé en ce que** la deuxième bride (31) présente au moins un trou oblong (32), apte à réaliser par soudage du trou en partie un assemblage par complémentarité de matière entre la deuxième bride (31) et la partie supérieure de la pièce latérale composée (6).

13. Agencement de rail de toit selon l'une quelconque des revendications 1 à 12, **caractérisé en ce que** la deuxième bride (31) présente une extrémité inférieure, qui est évasée par parties.

14. Véhicule, comportant au moins un agencement de rail de toit selon l'une quelconque des revendications 1 à 13.

15. Procédé de fabrication d'un agencement de rail de toit selon l'une quelconque des revendications 1 à 13, dans lequel
- on monte une première bride (30) d'au moins un dispositif de fixation (3) sur une face intérieure d'un toit de véhicule (2);
- on fixe un rail de toit (1) par parties au toit de véhicule (2) au moyen d'au moins une vis de montage (7) ou analogue et d'au moins un écrou (4);
- on assemble par parties à une pièce latérale composée (6) une deuxième bride (31) du dispositif de fixation (3), qui s'étend après le montage essentiellement en direction verticale vers l'intérieur de la carrosserie,
**caractérisé en ce que** l'on assemble, au moins par parties, la deuxième bride (31) du dispositif de fixation (3) par soudage, en particulier par soudage au CO₂, à une partie supérieure de la pièce latérale composée (6), qui s'étend de façon essentiellement parallèle à la deuxième bride (31) du dispositif de fixation (3).

16. Procédé selon la revendication 15, **caractérisé en ce que** l'on colle au moins par parties la première bride (30) du dispositif de fixation (3) sur la face intérieure du toit de véhicule (2).

17. Procédé selon la revendication 15 ou 16, **caractérisé en ce que** l'on brase au moins par parties la première bride (30) du dispositif de fixation (3) sur la face intérieure du toit de véhicule (2).

18. Procédé selon l'une quelconque des revendications 15 à 17, **caractérisé en ce que** l'on rive au moins par parties la première bride (30) du dispositif de fixation (3) sur la face intérieure du toit de véhicule (2).

19. Procédé selon l'une quelconque des revendications 15 à 18, **caractérisé en ce que** l'on soude l'écrou (4) sur une face inférieure de la première bride (30).

20. Procédé selon l'une quelconque des revendications 15 à 19, **caractérisé en ce que** l'on soude l'écrou (4) à l'intérieur du rail de toit (1).
